# EUROPEAN PATENT APPLICATION

(11) **EP 2 980 052 A2**
(43) Date of publication of application: **03.02.2016**
(21) Application number: 15178603.5
(22) Date of filing: 28.07.2015
(51) Int. Cl.: C06B 23/04, C06D 5/06

(54) **PYROTECHNIC COMPOSITION**

(30) Priority: 30.07.2014 GB 201413502
(71) Applicant: MARTIN-BAKER AIRCRAFT CO. LTD., Nr. Uxbridge, Middlesex UB9 5AJ (GB)
(72) Inventor: BARR, Graham Morris, Salisbury, Wiltshire SP2 0EN (GB)
(74) Representative: Bond, Christopher William

(57) **Abstract**

The present invention relates to a pyrotechnic composition comprising gunpowder and a metal carbonate, which is suitable for inflating an inflatable body such as inflatable air bags or life rafts.

## Description

The present invention relates to a pyrotechnic composition. More particularly, the present invention relates to a pyrotechnic composition for providing gases to inflatable bodies, for example inflatable air bags or life rafts.

Inflatable bodies are used at least when it is desirable to prevent damage to a human or animal body when impacted by a force. Non-limiting examples of inflatable bodies are inflatable side beams used in ejection seats. Further non-limiting examples of inflatable bodies are those used in air bags (in cars and other vehicles).

As an ejection seat initiates an eject procedure from an aircraft or other vehicle, a rocket motor or other propulsion system causes the seat to be propelled upwardly out of the cockpit. A parachute subsequently deploys and the ejection seat and its occupant return to the ground safely.

Upon initiation of the ejection procedure, the sudden propulsion of the seat out of the cockpit imparts a significant force on the occupant, tending to cause the occupant's head to tilt downwards towards their chest. Especially where the occupant is female and has a small frame, the neck muscles may not be able adequately to resist the force to maintain the head upright. As the ejection seat subsequently exits the space of the cockpit, it enters into the wind blast passing over the cockpit, which imparts a sudden force on the pilot's head toward the head rest. The helmet and any ancillary items mounted on the helmet further increase the surface area facing the wind blast. As a result, the head is then caused suddenly, and often violently, to be pushed backwards into the headrest. This extent of this sudden travel of the head can cause injuries to the occupant.

Moreover, at the point of ejection - generally occurring at a point of emergency - the occupant might not be seated in the ejection seat in the optimal position. For example, the occupant might be leaning forwards in the seat, or the occupant's head might be angled with respect to the centre of the seat. Such undesirable positioning of the occupant's body or head is referred to as being "out of position".

It will be appreciated that if an ejection sequence is initiated when the seat occupant is out of position, the forces imparted by the wind blast may exacerbate the misalignment of the occupant with the chair, risking injury. In cases where the occupant's head is near the edge of the headrest, the windblast force could cause the occupant's head to move behind the plane of the head rest, risking serious injury.

Moreover, as the seat leaves the cockpit, there is a risk that an out-of-position occupant could strike the side of the cockpit or equipment in the cockpit, causing injury or, at the very least, adversely affecting the ejection path from the cockpit.

There is a need to ensure that an occupant of an ejection seat is maintained in or near an optimal position throughout the ejection procedure. Previous efforts to solve this problem resulted in the provision of a headrest assembly including inflatable side beams configured to be inflated from a stowed configuration to a deployed configuration in which the side beams are positioned to substantially support portions of the ejected persons body, for example the head, to force the body into or near an optimal position throughout the ejection procedure. Such a headrest assembly including inflatable side beams was disclosed in PCT publication WO 2012/013985.

The inflatable side beams of the known headrest assemblies were inflated using a gas source, for example a pressurised canister containing nitrogen gas. Upon initiation of the headrest assembly, the pressurised nitrogen gas was permitted to inflate the inflatable side beams so as to support portions of the ejected person's body, for example the head, to force or retain the body into or near an optimal position throughout the ejection procedure.

A pressurised canister containing nitrogen gas for this purpose typically contains nitrogen gas at 4,000 psi (2.7579 x 10⁷ Pa). Over time, pressurised canisters containing nitrogen gas lose nitrogen gas to atmosphere. This lowers the pressure available to the inflatable side beams and risks the user leaving a cockpit "out of position" because, on initiation of an ejection seat, sufficient pressure of gas is not produced to sufficiently inflate the side beams.

The present invention is concerned with providing a pyrotechnic composition which provides a more reliable source of gas for inflatable bodies, for example inflatable side beams in an ejection seat.

Inflatable side beams in an ejection seat preferably inflate within 10 milliseconds and remain inflated for more than 20 milliseconds, preferably up to, or longer than, 200 milliseconds. If inflatable side beams remain inflated for less than 20 milliseconds, a user may become "out of position" during the ejection process. Most pyrotechnic compositions do not provide compressed gas for such a length of time; the gas pressure peaks at 10 milliseconds and falls off to near zero at 20 milliseconds. Furthermore, most pyrotechnic compositions provide gases at a temperature of around 3,000K. Such high temperatures are likely to puncture the material of most, if not all, inflatable side beams, for example Kevlar™ fibre.

The use of double-based propellants to provide pressurised gas was considered but they were found to be unstable and decompose relatively quickly, i.e. within 3 to 6 months, at the relatively high temperatures (up to around 93°C) experienced in the vicinity of inflatable side beams.

There is a need for a pyrotechnic composition which is stable and provides pressurised gases for more than 20 milliseconds, preferably up to, or longer than, 200 milliseconds, for example to inflate side beams in an ejection seat.

According to the present invention, there is provided a pyrotechnic composition, comprising:
gunpowder, and,
a metal carbonate,
wherein the ratio of gunpowder to metal carbonate, by weight, is from 45:55 to 30:70 (gunpowder:metal carbonate).

Preferably, wherein the pyrotechnic composition, consists essentially of, or consists of:
gunpowder,
a metal carbonate, and
unavoidable impurities at less than 2 weight percent of the composition, wherein the ratio of gunpowder to metal carbonate, by weight, is from 45:55 to 30:70 (gunpowder:metal carbonate).

Further preferably, wherein the ratio of gunpowder to metal carbonate, by weight, is from 45:55 to 35:65 (gunpowder:metal carbonate).

Advantageously, wherein the ratio of gunpowder to metal carbonate, by weight, is from 40:60 to 35:65 (gunpowder:metal carbonate).

Preferably, wherein the ratio of gunpowder to metal carbonate, by weight, is 35:65 (gunpowder:metal carbonate).

Further preferably, wherein the pyrotechnic composition further comprises or includes up to 1%, by weight, of a silica based hydrophobic additive for enhancing rheology and inhibiting moisture ingress into the pyrotechnic composition.

Advantageously, wherein the metal carbonate is CaCO₃, MgCO₃, ZnCO₃, CuCO₃, (CaMg)(CO₃)₂, FeCO₃, KHCO₃, K₂CO₃ or a mixture of any two, three, four, five, six or seven of these metal carbonates.

Preferably, wherein the metal carbonate is MgCO₃.

Further preferably, wherein the MgCO₃ is anhydrous MgCO₃.

Advantageously, wherein the anhydrous MgCO₃ contains no more than 5, 4, 3, 2 or 1 % water by weight percentage.

Preferably, wherein the gunpowder is G7, G12, G20 or G40 gunpowder, wherein the number following the G in each case refers to the holes per inch (per 2.54 cm) in a mesh through which the particular grade of gunpowder passes.

Further preferably, wherein the gunpowder has a composition, by weight, of 40-90% KNO₃, 10-45% C and 0-15% S.

Advantageously, wherein the gunpowder has a composition, by weight, of 65-85% KNO₃, 10-20% C and 5-15% S.

Preferably, wherein the gunpowder has a composition, by weight, of 75% KNO₃, 15% C and 10% S; optionally wherein the weight percentages of each component can differ by ±10%, ±5%, ±4%, ±3%, ±2% or ±1%.

Further preferably, wherein the gunpowder is sulfur-free gunpowder; optionally, wherein the sulfur-free gunpowder has a composition, by weight, of 40-90% KNO₃ and 10-60% C.

According to a further aspect of the present invention, there is provided a method of inflating an inflatable body, wherein the method comprises the steps of:
providing a pyrotechnic composition according to the above;
igniting the pyrotechnic composition; and,
directing the gases formed on ignition of the pyrotechnic composition to inflate the inflatable body.

Preferably, wherein the inflatable body is an inflatable side beam for an ejection seat or an air bag.

In another aspect of the present invention, there is provided a use of a pyrotechnic composition according to the above to inflate an inflatable body.

Preferably, wherein the inflatable body is an inflatable side beam for an ejection seat or an air bag.

Further preferably, wherein the inflatable body is for use in an ejection seat.

Advantageously, wherein the inflatable body is a life raft.

According to a further aspect of the present invention, there is provided an ejection seat comprising a pyrotechnic composition according to any one of the above.

Embodiments of the invention are described below, by way of non-limiting example only, with reference to the accompanying figures, in which:
Figure 1 is a graph qualitatively illustrating the relationship between temperature (T) (or pressure (P)) and time in reactions;
Figure 2 is a schematic representation of cross-section of a canister arrangement for storing and igniting a pyrotechnic composition according to the present invention;
Figure 3 is a graph showing the difference in reaction profiles when changing the ratio of gunpowder to magnesium carbonate;
Figure 4 is a graph showing a comparison between the reaction profiles of pure gunpowder and a pyrotechnic composition according to the present invention;
Figure 5 is a graph showing a comparison between reaction profiles of a pyrotechnic composition according to the present invention stored under different conditions.

Some of the components of the pyrotechnic compositions of the present invention, together with their sources, are set out below.

### Gunpowder

Gunpowder is a chemical explosive. Gunpowder is a mixture of sulphur (S), charcoal (C) and potassium nitrate (KNO₃). Gunpowder used in the present specification can have a composition, by weight, of 40-90% KNO₃, 10-45% C and 0-15% S. Optionally, gunpowder used in the present specification can have a composition, by weight, of 65-85% KNO₃, 10-20% C and 5-15% S. Optionally, the gunpowder used in the present specification can have a composition, by weight, of 75% KNO₃, 15% C and 10% S; optionally wherein the weight percentages of each component can differ by ±10%, ±5%, ±4%, ±3%, ±2% or ±1 %.

When gunpowder explodes, it produces a large amount of heat and a large volume of gas. Hence, gunpowder is widely used as a propellant.

An example of commercially available gunpowder is that sold in the UK by Orica UK Ltd.

Gunpowder is classed as a low explosive because it has a relatively slow (compared to other explosives, for example trinitrotoluene (often referred to as TNT)) decomposition rate and consequently low shattering capability (sometimes referred to as brisance). However, on ignition, gunpowder is highly energetic and produces much heat and gas.

In this specification, different grades of gunpowder are referred to, namely, G7, G12, G20 and G40. Using this terminology, "G" refers to gunpowder and number following "G" refers to the holes per inch (per 2.54 cm) in a mesh through which the particular grade passes. In other words, G7 grains are, on average, larger than G40 grains.

In referring to gunpowder in this specification, this includes sulfur-free gunpowder (often referred to as SFG). Sulfur-free gunpowder has a composition, by weight, of 40-90% KNO₃ and 10-60% C.

### Metal carbonate

Metal carbonates are the carbonate salt of any particular metal. The most common metal carbonates in nature are calcium carbonate, calcium-magnesium carbonate and iron (II) carbonate. Other examples of metal carbonates include, but are not limited to, magnesium carbonate, zinc carbonate, copper (II) carbonate and potassium bicarbonate.

### Anhydrous

The term anhydrous in this specification, when referring to a compound, means the compound contains substantially no water. By containing substantially no water, the compound contains no more than 5, 4, 3, 2, or preferably no more than 1 % water by weight percentage.

### Pyrotechnic compositions

One of the generally accepted chemical equation for the ignition of gunpowder is as follows:
10KNO₃(s) + 3S(s) + 8C(s) → 2K₂CO₃(s) + 3K₂SO₄(s) + 5N₂(g) + 6CO₂(g)

Gunpowder typically ignites at approximately 300°C at atmospheric pressure (101,325 Pa). The reaction is exothermic and produces gases at around 3,000K. Approximately 300 cm³ of gas (in total) is produced per one gram of gunpowder ignited at atmospheric pressure. Typically, gunpowder is used to provide as much energy as possible, for example to fire a bullet out of a gun or to break rock formations during mining operations.

Using generally pure gunpowder to instantly provide gases to inflatable bodies, for example inflatable side beams in an ejection seat, is not practical at least because the inflatable side beams would have to be formed of expensive highly durable materials, and to be formed by a complicated and expensive manufacturing process, to withstand the high pressures and temperatures, without bursting.

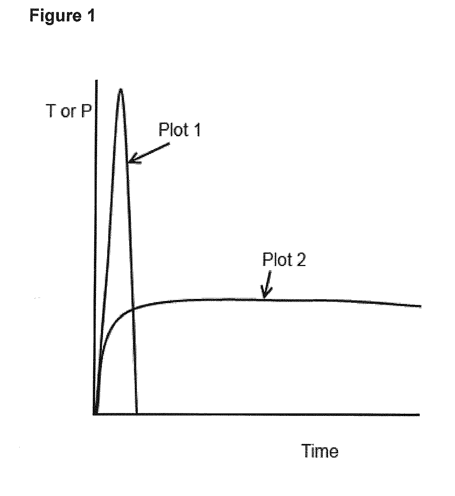

The present inventors sought to harness the quick formation of gases that gunpowder provides; whilst prolonging the time over which gases are formed, reducing the temperature at which gases are formed and reducing the pressure of the gases, so that the gases could be used to inflate hollow bodies, for example inflatable side beams in ejection seats. Gunpowder is useful for this purpose because it does not decompose under standard atmospheric temperatures and pressures (as other propellants do). Pyrotechnic compositions according to the present invention utilise a combination of gunpowder with one or more metal carbonates. Without wishing to be bound by theory, the metal carbonates act to slow down the explosive gunpowder reaction, thereby prolonging the reaction and spreading the formation of heat and gases over a longer time period. This effect can be seen qualitatively with reference to figure 1. Without wishing to be bound by theory, the metal carbonates take in energy from the burning gunpowder to decompose at approximately 350°C and produce carbon dioxide gas as a product of their decomposition. In so doing, the temperature of the pyrotechnically derived gases is lowered at the same time as producing extra (cool, relative to the pyrotechnically derived gases) gases from the decomposing metal carbonates.

In figure 1, the y-axis qualitatively illustrates either the temperature or pressure of the reaction. The x-axis qualitatively illustrates the time after the explosion starts. Plot 1 illustrates a typical gunpowder explosion, where a peak in temperature of around 3000K occurs within approximately 10 milliseconds of initiating the explosion and drops back to its starting point within approximately 20 milliseconds. Plot 2 illustrates an explosion profile using the pyrotechnic compositions of the present invention. Using the pyrotechnic composition of the present invention, a plateau of pressure is reached within approximately 10 milliseconds and this is maintained for more than 20 milliseconds; preferably up to, or more than, 200 milliseconds.

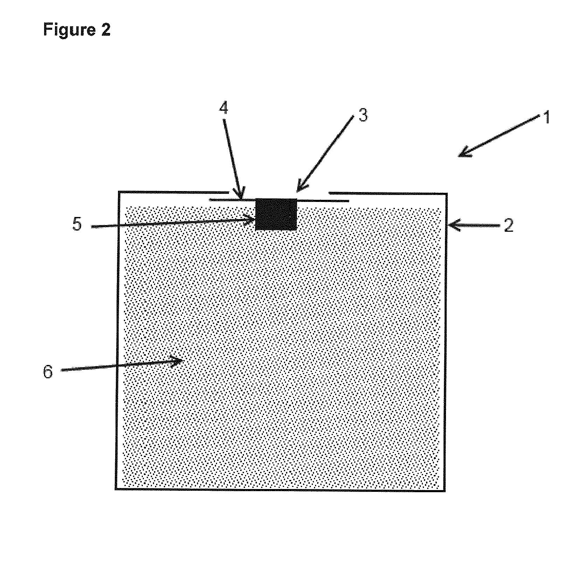

Figure 2 shows a cross-section of a non-limiting canister arrangement 1. The canister arrangement 1 can be used to provide gas products from an explosive reaction to an inflatable body. The canister arrangement 1 includes a receptacle 2 having an opening 3. The receptacle is generally cylindrical and formed of a material which can withstand high pressures, for example stainless steel. The opening 3 is closed to atmosphere by a burst disc 4. The burst disc 4 is formed of a material which bursts under a threshold pressure, for example stainless steel. The threshold pressure can be chosen by a user depending on the pressure of gas desired to be delivered through the opening 3. The burst disc 4 is attached to a igniter 5. Alternatively (not shown), the igniter 5 is in any other position within the receptacle 2. The igniter 5 is preferably formed of pure gunpowder. Alternatively, the igniter 5 is formed of any material capable of igniting gunpowder. The igniter 5 can be ignited, for example by applying a voltage to the igniter through a metal fuse (not shown).

Held within the canister 2 is a pyrotechnic formulation 6 according to the present invention. Ignition of the igniter 5 ignites the pyrotechnic formulation 6 so that gases are formed within the canister 2. When a critical amount of pressure builds up behind the burst disc 4, the burst disc 4 ruptures permitting the gases to exit the canister 2 through the opening 3. In one embodiment (not shown), the igniter and the burst disc are separated by a steel wire mesh. According to one preferred example of the present invention, the opening 3 is connected to a hollow body (not shown) (optionally, through a nozzle (not shown)) and the gases inflate the hollow body. In a particularly preferred aspect of the present invention, the opening 3 is connected to a hollow body within an ejection seat, for example a side beam, and the ignition of the pyrotechnic composition 6 forms part of the ejection procedure of the ejection seat so that one or more air blades or air bags are inflated and remain inflated for a desired length of time to keep an ejected person in or near an optimal position throughout an ejection procedure.

A number of non-limiting examples of pyrotechnic compositions were prepared and tested.

### Initial tests

As an initial test of the effectiveness of different metal carbonates in influencing ignited gunpowder, a generally cylindrical heavy weight pressure chamber (similar to the canister shown schematically in figure 2) was used to test different pyrotechnic compositions. The internal dimensions of the heavy weight pressure chamber were 22mm diameter by 30 mm length. Burst disc material was 0.003" (0.0762 mm) stainless steel. The weight of pyrotechnic in each case was 12.66g. Table 1 summarises the results:

**Table 1**

| Pyrotechnic | Vent diameter | Peak pressure (psi) | Time to peak pressure (msec) |
|---|---|---|---|
| G7 | 6 mm. | 14,040 | 7.1 |
| G12 | 6 mm. | 21,251 | 3.9 |
| G20 | 6 mm. | 23,200 | 2.3 |
| G40 | 6 mm. | 24,924 | 1.7 |
| G20 + 10wt.% CaCO₃ | 6 mm. | 15,178 | 3.2 |
| G20 + 10wt.% MgCO₃ (basic) | 6 mm. | 12,834 | 4.9 |
| G20 + 10wt.% ZnCO₃ (basic) | 6 mm. | 15,098 | 3.47 |
| G20+10wt.% CuCO₃ (basic) | 6 mm. | 14,927 | 3.2 |
| G20+10wt.% MgCO₃ (anhydrous) | 6 mm. | 9,755 | 7.3 |
| G7 | 7 mm | 13,009 | 2.1 |
| G7 | 8 mm | 4,734 | 5.9 |
| G7 | 9 mm | 3,130 | 5.3 |
| G7 | 10 mm | 2,784 | 4.7 |
| G7 | 12 mm | 1,437 | 5.7 |

All gunpowders used in the examples (G7, G12, G20, G40) had a composition, by weight, of 75% KNO₃, 15% C and 10% S.

These initial tests showed that MgCO₃ (anhydrous) was the most effective carbonate in calming the explosive reaction of gunpowder. MgCO₃ (anhydrous) reduced peak pressure by approximately 50% with a loss of only approximately 13% overall performance for the addition of only 10% by weight. G7 gunpowder performs well enough as a gas generator with the most benign pressure region of the 4 grains sizes trialled - this may be due to its greater average grain size.

### Changing percentages of metal carbonate

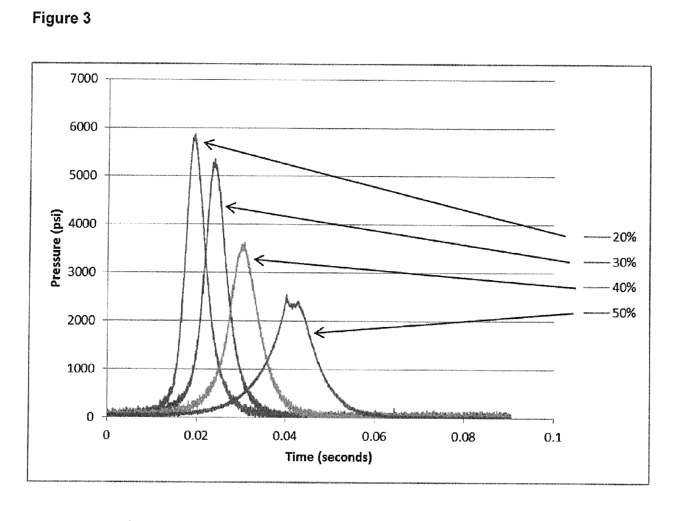

Heavy weight pressure vessel tests were carried out using progressively larger percentages of anhydrous MgCO₃ mixed with G20 gunpowder. The vent hole size was diameter ø6.0 mm (0.236") and the burst disc material was 0.003" (0.0762 mm) stainless steel. Pressure v time traces for different weight percentages of MgCO₃ to G20 gunpowder are shown in figure 3. The G20 gunpowder had a composition, by weight, of 75% KNO₃, 15% C and 10% S

In figure 3, the traces results from compositions of certain percentages by weight (the percentages specified with arrows) anhydrous MgCO₃ mixed with G20 gunpowder (the balance to 100% being G20 gunpowder). Generally, the lower the percentage of anhydrous MgCO₃, the sooner the profile peaks and the higher the maximum generated pressure.

When 60% (by weight) anhydrous MgCO₃ was mixed with 40% (by weight) G20 gunpowder with the same set of parameters (vent hole and burst disc) as used to obtain the plots of figure 3, the burst disc did not rupture and if a weaker burst disc was used the vent was too large to sustain pressurised gas flow. To test 60% (by weight) anhydrous MgCO₃ mixed with 40% (by weight) G20 gunpowder, a weaker burst disc 0.004" (0.102 mm) aluminium was used along with a vent diameter of 3.0 mm.

When the weight percentage of MgCO₃ was increased to over 70% (not shown in the graphs), not enough pressure was generated to burst the burst disc.

Overall, as the weight percentage of MgCO₃ increased, the peak pressure dropped off. Without wishing to be bound by theory, addition of MgCO₃ to the pyrotechnic composition acts to cool down the explosive reaction of gunpowder, lower the peak pressure and prolong the time over which gas is generated.

A particularly preferred pyrotechnic composition (referred to as composition A) according to the present invention comprises G20 gunpowder (35 weight %) and MgCO₃ (65 weight %) (the G20 gunpowder used had a composition, by weight, of 75% KNO₃, 15% C and 10% S). It was found that a composition having this proportional combination of components, when used in a canister arrangement (similar to that shown in figure 2), provides enough heated gas to safely inflate an inflatable side beam within an ejection seat, whilst not rupturing the side beam. In other applications, i.e. where the hollow body is either larger or smaller than an inflatable side beam, and/or where it is desired to provide gas quicker or slower, different proportions of gunpowder to MgCO₃ may be preferred.

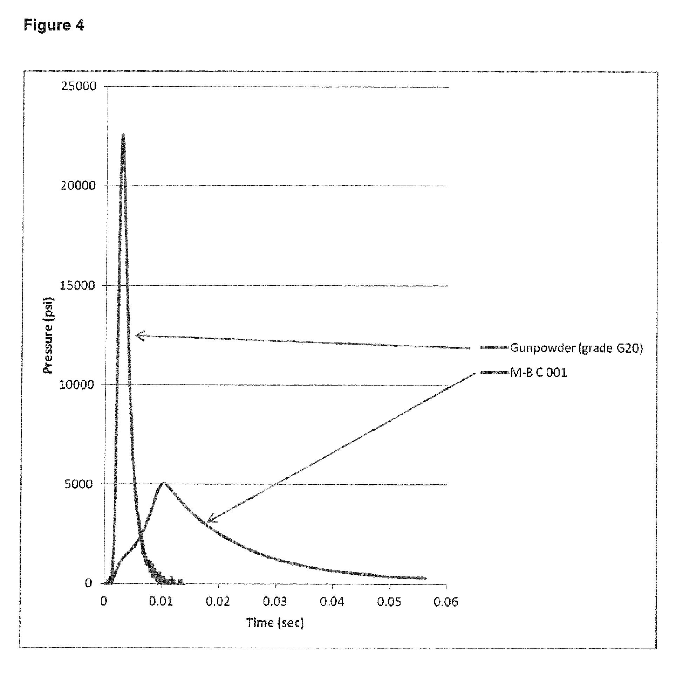

Figure 4 shows a comparative test of pure gunpowder and composition A (composition A is referred to as M-B C 001 in Figure 4). These plots were produced using a canister arrangement (similar to that shown in figure 2), having a burst disc 0.004" (0.102 mm) of aluminium and a vent diameter of 3.0 mm. Figure 4 shows that a composition according to the present invention provides pressurised gases for more than 20 milliseconds, whilst pure gunpowder provides pressurised gases at a higher pressure and for a shorter amount of time. Comparing figures 3 and 4, the composition with 65 weight % anhydrous MgCO₃ burns nearly ten times longer and with a peak pressure more than twice that of a composition of 50 weight % anhydrous MgCO₃.

Compositions according to the present invention are particularly suited for providing gases to inflatable bodies, for example inflatable air bags.

### Safety tests

Composition A can be ignited under heavy confinement, for example as in the canister 2 discussed with reference to figure 2. Tests show that composition A, under standard temperature and pressure and on contact with a flame, does not ignite. On the contrary, composition A could be used as a flame retardant.

The most severe test was carried out on a mound (50g) of composition A. This mound was subjected repeatedly to a blow lamp flame of approximately 1750°C and atmospheric pressure. In the presence of the flame some of the small grains of gunpowder could be seen igniting individually. However, immediately the heat source was removed composition A self-extinguished.

Table 2 shows the results when composition A was fired in a combustion chamber:

**Table 2**

| Test Conditions | Composition Mass (g (gr)) | Vent Diameter mm (in) | Burst Disc | Ignition g (gr) G20 | Peak Pressure psi |
|---|---|---|---|---|---|
| +20°C (+68°F) | 96.5 (1489) | 5.0 (0.20) | 0.005" (0.127 mm) copper | 1.5 (23.1) | 4266 |
| +93°C (+200°F) | 96.5 (1489) | 5.0 (0.20) | 0.005" (0.127 mm) copper | 1.5 (23.1) | 5339 |
| -40°C (-40°F) | 96.5 (1489) | 5.0 (0.20) | 0.005" (0.127 mm) copper | 1.5 (23.1) | 3699 |

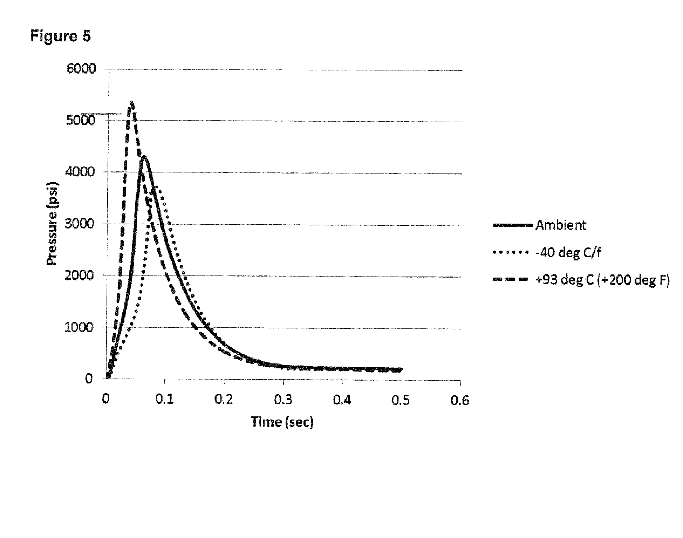

These tests are shown in figure 5. Figure 5 shows the performance of composition A when stored and fired at three different temperatures. In these tests, composition A was fired using an electric fusehead.

These tests show that composition A does not pose a hazard under conditions usually experienced by an ejection seat and does not decompose. Therefore, composition A is suitable for use in a canister fitted to an ejection seat to provide gases to inflatable bodies.

Optionally, compositions of the present invention may additionally include 1 weight % or less of a silica based hydrophobic additive, for example Aerosil™ R202 as sold by Evonik™. This additive enhances rheology of the composition for easier handling and inhibits moisture ingress into the composition.

Without wishing to be bound by theory, it is believed that anhydrous metal carbonates, preferably anhydrous MgCO₃, provide better results in the pyrotechnic compositions of the present invention because water molecules in non-anhydrous metal carbonates act to further slow the rate of explosive reaction.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A pyrotechnic composition, comprising:
gunpowder, and,
a metal carbonate,
wherein the ratio of gunpowder to metal carbonate, by weight, is from 45:55 to 30:70 (gunpowder:metal carbonate).

2. The pyrotechnic composition according to claim 1, wherein the pyrotechnic composition, consists essentially of, or consists of:
gunpowder,
a metal carbonate, and
unavoidable impurities at less than 2 weight percent of the composition, wherein the ratio of gunpowder to metal carbonate, by weight, is from 45:55 to 30:70 (gunpowder:metal carbonate).

3. The pyrotechnic composition according to any one of claims 1 or 2, wherein the ratio of gunpowder to metal carbonate, by weight, is from 45:55 to 35:65 (gunpowder:metal carbonate); optionally, wherein the ratio of gunpowder to metal carbonate, by weight, is from 40:60 to 35:65 (gunpowder:metal carbonate); optionally, wherein the ratio of gunpowder to metal carbonate, by weight, is 35:65 (gunpowder:metal carbonate).

4. The pyrotechnic composition according to any one of the claims 1 to 3, wherein the pyrotechnic composition further comprises or includes up to 1%, by weight, of a silica based hydrophobic additive for enhancing rheology and inhibiting moisture ingress into the pyrotechnic composition.

5. A pyrotechnic composition according to any one of claims 1 to 4, wherein the metal carbonate is CaCO₃, MgCO₃, ZnCO₃, CuCO₃, (CaMg)(CO₃)₂, FeCO₃, KHCO₃, K₂CO₃ or a mixture of any two, three, four, five, six or seven of these metal carbonates; optionally, wherein the metal carbonate is MgCO₃; optionally, wherein the MgCO₃ is anhydrous MgCO₃; optionally, wherein the anhydrous MgCO₃ contains no more than 5, 4, 3, 2 or 1 % water by weight percentage.

6. A pyrotechnic composition according to any one of claims 1 to 5, wherein the gunpowder is G7, G12, G20 or G40 gunpowder, wherein the number following the G in each case refers to the holes per inch (per 2.54 cm) in a mesh through which the particular grade of gunpowder passes.

7. A pyrotechnic composition according to any one of claims 1 to 6, wherein the gunpowder has a composition, by weight, of 40-90% KNO₃, 10-45% C and 0-15% S; optionally, wherein the gunpowder has a composition, by weight, of 65-85% KNO₃, 10-20% C and 5-15% S; optionally, wherein the gunpowder has a composition, by weight, of 75% KNO₃, 15% C and 10% S; optionally wherein the weight percentages of each component can differ by ±10%, ±5%, ±4%, ±3%, ±2% or ±1%; or,

8. A pyrotechnic composition according to any one of claims 1 to 6, wherein the gunpowder is sulfur-free gunpowder; optionally, wherein the sulfur-free gunpowder has a composition, by weight, of 40-90% KNO₃ and 10-60% C.

9. A method of inflating an inflatable body, wherein the method comprises the steps of:
providing a pyrotechnic composition according to any one of claims 1 to 8;
igniting the pyrotechnic composition; and,
directing the gases formed on ignition of the pyrotechnic composition to inflate the inflatable body.

10. The method of claim 9, wherein the inflatable body is an inflatable side beam for an ejection seat or an air bag.

11. Use of a pyrotechnic composition according to any one of claims 1 to 8 to inflate an inflatable body.

12. The use of claim 11, wherein the inflatable body is an inflatable side beam for an ejection seat or an air bag.

13. The use of claim 11, wherein the inflatable body is for use in an ejection seat.

14. The use of claim 11, wherein the inflatable body is a life raft.

15. An ejection seat comprising a pyrotechnic composition according to any one of claims 1 to 8.
